# EUROPÄISCHE PATENTSCHRIFT

(11) **EP 0 334 987 B1**
(45) Veröffentlichungstag und Bekanntmachung des Hinweises auf die Patenterteilung: **10.03.1993**
(21) Anmeldenummer: 88105833.3
(22) Anmeldetag: 13.04.1988
(51) Int. Cl.: B07C 5/342, B07C 5/36

(54) **Abfallhohlglassammler mit Vereinzelungsvorrichtung und Farbsortierung**
Hollow glass waste collector with separating device and colour sorting
Collecteur de déchets de verre concave pourvu d'un dispositif de séparation et de tri selon la couleur

(30) Priorität: 26.03.1988 DE 3810450
(43) Veröffentlichungstag der Anmeldung: 04.10.1989
(73) Patentinhaber: Mabeg Müll- und Abfallbeseitigungs- gesellschaft mbH & Co. oHG., D-44649 Herne (DE)
(72) Erfinder: Bauing, Hans Nolte, D-5810 Witten-Heven (DE)
(74) Vertreter: Herrmann-Trentepohl, Werner, Dipl.-Ing.

(56) Entgegenhaltungen:
- DE-B- 2 952 411
- DE-U- 8 436 466
- US-A- 3 312 357
- US-A- 3 747 755
- US-A- 4 205 752

## Beschreibung

Die Erfindung betrifft einen Abfallhohlglassammler mit Vereinzelungsvorrichtung und Farbsortierung gemäß dem Oberbegriff des Patentanspruches 1.

Abfallhohlgläser fallen in erheblicher Menge als Verpackungsmaterial zahlreicher Stoffe, insbesondere von Lebensmitteln an und stellen grundsätzlich einen wertvollen Rohstoff für Glashütten dar. Die Sammlung von Abfallhohlglas verfolgt den Zweck, den Glashütten diesen Rohstoff zur Verfügung zu stellen und dadurch die Hausmülldeponien zu entlasten. Hierbei ist erkannt worden, daß braun und grün eingefärbte Hohlgläser als Rohstoff einen Wert repräsentieren, der erheblich unter dem Wert des Weißglases liegt. Die Vereinzelungsvorrichtung schafft die Voraussetzung für eine Sortierung der Hohlgläser nach mehreren Farben, wobei erfindungsgemäß in der Regel nach allen drei Farben sortiert wird. Die Farbsortierung kann nach verschiedenem physikalischen Kriterien elektronisch erfolgen, arbeitet aber in der Regel mit optischelektronischer Farberkennung, welche voraussetzt, daß jeder Hohlglasgegenstand einzeln an der optischen Abtastung vorbeigeführt wird.

Die Erfindung bezieht sich grundsätzlich auf den Teil der Abfallhohlglassammlung, der die beschriebene Sortierung vornimmt und der in der Glashütte eingerichtet sein kann, wenn die Abfallhohlgläser unsortiert angeliefert werden. Dann sind an Stelle der Kammern Fallschächte vorgesehen, durch die die Hohlglassorten abgegeben werden. Die Erfindung bezieht sich insbesondere auf Depotbehälter, welche in Verbrauchernähe aufgestellt werden. Dann sind die Fallschächte unten geschlossen und bilden Kammern, in denen die Hohlglassorten vorläufig aufbewahrt werden. Im folgenden wird die Erfindung hauptsächlich anhand dieser Ausführungsform mit Kammern erläutert.

In allen Fällen ist nur eine Einwurföffnung für das unsortierte Hohlglas vorgesehen, hinter der die Vereinzelungsvorrichtung und die Farbsortierung angeordnet sind. Solche Depotbehälter sind als einzige geeignet, die unterschiedlich wertvollen Gläser zuverlässig zu trennen, weil sich Scherben unsortierter Hohlgläser nicht mehr automatisch sortieren lassen. Depotbehälter mit nach Farben getrennten Einwürfen gestatten keine zuverlässige Trennung der unterschiedlichen Hohlgläser, weil sie nicht automatisch erfolgt und von dem Anlieferer abhängt.

Soweit sich die Erfindung auf Depotbehälter bezieht, betrifft sie auch den weiteren Weg des Hohlglases bis zur Glashütte, auf dem die einmal nach Farben sortierten Hohlgläser zuverlässig getrennt gehalten werden müssen. Das beruht auf der Eigenart der Weißglasherstellung, die nämlich voraussetzt, daß die in die Glasschmelze eingesetzten Scherben ausschließlich aus Weißglas bestehen, weil schon geringste Mengen an Buntglas zur Einfärbung der Schmelze in der Glaswanne führen. Hieraus ergibt sich, daß die Abfallhohlgläser von der Sortierung bis zur Anlieferung an die Glashütte streng nach Farben getrennt gehalten werden müssen.

Hohlglasabfall enthält auch nach Farbsortierung noch Stoffe, welche ausgeschieden werden müssen, bevor das Glas in die Schmelzwanne eingebracht wird. Dazu gehören in erster Linie Metalle, welche als Flaschenverschlüsse oder -deckel mit den Gläsern verbunden sind, aber auch Keramik, welche in Form von Flaschen oder anders geformten Behältern zusammen mit Hohlgläsern in den Einwurf gelangen. Abgesehen von diesen Nichtglasstoffen finden sich im Abfallhohlglas andere Fremdkörper, welche mutwillig oder irrtümlich eingeworfen werden. Daraus ergibt sich ein weiterer Aufbereitungsschritt, mit den Nichtgläsern aus dem Rohstoff aussortiert werden, was bislang in der Regel in der Glashütte auf Lesebändern geschieht.

Aus der DE-B1-29 52 411 ist ein Depotbehälter bekannt, der für die drei Glasfarben je eine Kammer enthält. Wird der Abfallhohlglassammler jedoch lediglich zur Sortierung eingesetzt, so fehlt in den Kammern der Boden. Dann bilden die Kammern Fallschächte. Die Vereinzelungsvorrichtung besteht aus einem Schacht, der unter der Einwurföffnung angeordnet ist und aus einer schwenkbarren Schurre, welche unter dem Schacht pendelnd aufgehängt und über den Kammern bzw. Fallschächten angeordnet ist. Die Farbsortierung ist zwischen em Schacht und der Schurre angeordnet. Das Abfallhohlglas wird dabei von einer Lichtschranke durchstrahlt, mit der die Farben erkannt werden. Ein Steueraggregat schwenkt die Schurre je nach Farbe aus, so daß das erkannte Hohlglas in die richtige Kammer fällt.

Für die Praxis sind solche Depotbehälter schlechthin unbrauchbar, weil sie infolge des Höhenverlustes durch den Schacht, die Farbsortierung und die Schurre entweder zu hoch bauen oder nur einen minimalen Stauraum in den Kammern gewähren, so daß ein solcher Depotbehälter dauernd entleert werden muß. Diese Entleerung ist zudem problematisch, weil keine Möglichkeit besteht, bei der Entleerung und während des Abtransportes des entleerten Glases die Scherben nach Farben getrennt zu halten. Ungünstig ist ferner, daß das vom Hohlglas getrennte Nichtglas in das Glas gerät und daß der Behälter keine Sicherung gegen Wandalismus aufweist, etwa gegen Beschädigungen der Schurre durch mutwillige Eingriffe von außen. Die Folge ist, daß bei der Aufstellung dieser Depotbehälter der Rohstoff mit hohen Kosten belastet ist und das gesammelten Weißglas unrein ist, das sich nicht mehr weiterverwenden läßt, sondern in den minderwertigen Glasabfall gelangt.

Wenn dagegen der vorbekannte Abfallhohlglassammler nur als Sortiereinrichtung ohne Boden mit Fallschächten zur getrennten Abführung der sortierten Hohlgläser verwendet wird, fallen die Mängel seiner Sortiereinrichtung besonders ins Gewicht. Sie bestehen vor allem in den unkontrollierbaren Fehlausträgen, welche durch die ungenügende Vereinzelungswirkung des Schachtes und der Schurre sowie u.a. durch die Ablenkung des zur Farberkennung verwendeten Lichtstrahles infolge der Krümmung des Hohlglases entstehen. Bedenkt man, daß eine einzige fehlsortierte Glasflasche brauner oder grüner Färbung mehrerer Tonnen Weißglas unbrauchbar machen kann, wenn sie nicht rechtzeitig vom Weißglas getrennt wird, so ergibt sich hieraus, daß Unzuverlässigkeiten bei der Glassortierung nicht hingenommen werden können.

Aus der DE-U-8 436 466 ist ein Abfallhohlglassammler bekannt, von dem die Erfindung ausgeht. Dieser Abfallhohlglassammler weist neben einer bereits aus der DE-B1-29 52 411 bekannten Vereinzelungsvorrichtung und einer Farbsortierung einen im wesentlichen horizontalen Stetig förderer mit seitlichem Auswurf durch von der Farbsortie rung betätigte Abstreifer auf. Neben bereits oben erwähn ten Nachteilen besteht auch hierbei das Problem, daß die Hohlgläser im Hohlglassammler nicht unbedingt zerbrechen bzw. zerkleinert werden, so daß das gesammelte Glas lediglich ein geringes Schüttgewicht aufweist.

Der Erfindung liegt die Aufgabe zugrunde, einen Abfallhohlglassammler der beschriebenen Art zu schaffen, welcher Gläser unterschiedlicher Färbung exakt sortiert und auf einfache Weise zuverlässig getrennt hält, wobei die Aufnahmefähigkeit des Sammlers gesteigert werden soll.

Diese Aufgabe löst die Erfindung mit den Merkmalen des Patentanspruches 1. Weitere Merkmale der Erfindung sind Gegenstand der Unteransprüche.

Gemäß der Erfindung fallen die einzeln in die Einwurföffnung eingebrachten und daher noch weitgehend unbeschädigten Hohlgläser auf den horizontalen Stetigförderer, der mit seinem beweglichen Förderorgan die Hohlgläser vereinzelt und getrennt hält in den er die Gläser hintereinanderliegend transportiert. Infolgedessen werden diese Hohlgläser von der Lichtquelle der Farbsortierung nach einer vorgegebenen Linie , insbesondere ihrer Längsmittellinie durchstrahlt und abgetastet, wenn sie sich an der Lichtquelle vorbeibewegen. Daher wird jedes Hohlglas auf einer ausgedehnten Länge, bei Flaschen und ähnlichen Hohlgläsern vom Hals bis zum Boden mit einer Lichtquelle erfaßt. Deswegen ist die Sortierung praktisch fehlerfrei. Ist der Sammler in der Glashütte eingesetzt, lassen sich mit Hilfe mehrerer, unabhängig voneinander arbeitender Lichtschranken sogar Glasscherben richtig erkennen und nach ihrer Färbung aussortieren.

Das horizontale, auf dem Stetigförderer transportierte Hohlglas kann dazu verwendet werden, das Licht zu fokussieren. Das erlaubt eine Leistungsverminderung der Optik. Die Farberkennung kann sogar mit Dioden erreicht werden. Der Stromverbrauch läßt sich entsprechend vermindern. Bei der Verwirklichung von Depotbehältern ist das von erheblicher Bedeutung, weil dafür eine Eigenstromversorgung benötigt wird. Erfindungsgemäß sind daher die Voraussetzungen auch für Solargeneratoren als Stromversorger gegeben.

Die horizontale Anordnung des Stetigförderers verbraucht keine Höhe zur Bewegung der Hohlgläser in die Kammern oder Fallschächte. Das nutzt die Erfindung zur Anbringung der festehenden Beile, auf die das aussortierte Glas fällt und zerbricht. Die damit verbundene Zerkleinerung des Hohlglases erhöht das Schüttgewicht und damit die Aufnahmefähigkeit des Depotbehälters entscheidend, erleichtert aber auch das spätere Aussortieren von Nichtglas, welches mit dem Hohlglas zunächst verbunden ist.

Der Stetigförderer hat schließlich den Vorteil, daß er vom Hohlglas von vornherein getrenntes Nichtglas in einen eigens dafür vorgesehenen Fallschacht bzw. eine Kammer transportieren kann, sofern für jedes Farbkriterium eine Schwenkklappe zum Auswerden der weißen, grünen und braunen Hohlgläser vorgesehen wird. Damit ist es möglich, Keramikscherben oder keramische Flaschen bzw. andere Fremdkörper von vornherein von den Fallschächten oder Kammern fernzuhalten.

In der US-A-3 747 755 ist eine Vereinzelungsvorrichtung beschrieben, bei der mit Hilfe von Sensoren Proben oder Objekte auf ihren Inhalt untersucht und dementsprechend aussortiert werden.

Aus der US-A-4 205 752 ist eine Farbsortiervorrichtung bekannt, bei der beispielsweise Früchte über Sensoren nach ihrer Farbe sortiert und von Förderbändern, auf denen sich die Früchte befinden, über Schwenkklappen entsprechend ihrer ermittelten Farbe abgeworfen werden.

Die Ausdehnung in der Horizontalen sollte möglichst gering sein, weil der Stetigförderer praktisch die größte Tiefe des Abfallhohlglassammlers, insbesondere eines Depotbehälters bestimmt. Andererseits sollte zur Vermeidung von Schäden durch den eingangs erwähnten Wandalismus der Stetigförderer jeder Einwirkungsmöglichkeit von außen entzogen sein. Das gelingt mit den Merkmalen des Patentanspruches 2. Hierbei wird das eingeworfene Hohlglas von der Prallwand gestoppt und fällt dann in den Trichter der Hohlglasübergabe. Dieser bringt die Bewegung des Hohlglases zum Stillstand, weil die Schwinge erst durch das volle Gewicht des Hohlglases ausgelenkt wird. Damit ist gewährleistet, daß der Hohlglaskörper auf dem bewegten Förderorgan des Stetigförderers keine Eigenbewegungen ausführen kann. Das ermöglicht die Anordnung der Farberkennung unmittelbar hinter dem Trichter und spart deswegen an Länge des Stetigförderers und bei Depotbehältern an Tiefe des Behälters. Andererseits bietet die Prallwand ein Hindernis für unbefugt durch die Öffnung eingeführte Fremdkörper, mit denen deswegen der Trichter und seine Mechanik nicht mehr erreichbar sind.

Mit den Merkmalen des Patentanspruches 3 wird der Stetigförderer so ausgebildet, daß sich auf ihm das Hohlglas von selbst derart ausrichtet, daß z.B. Flaschen liegend und mit ihrem Boden oder mit ihrem Hals nach vorn in Richtung ihrer längeren Dimension transportiert werden. Außerdem gestattet der geteilte Gurt des Förderbandes die linienförmige Abtastung mit einer zentrierten und stationären Lichtquelle. Diese kann raumsparend unter dem Bandgerüst angeordnet werden. Die Hohlgläser führen auf dem geteilten Gurt des Förderbandes keine Relativbewegungen aus, so daß die gewünschte linienförmige Abtastung zustande kommt.

Es hat sich herausgestellt, daß Flaschen und ähnliche Hohlglaskörper nur unter bestimmten Voraussetzugen durch ihre im freien Fall entwickelte Bewegungsenergie zertrümmert werden, wenn die Fallhöhe so weit wie möglich vermindert wird. Darin liegt eine weitere Möglichkeit zur Vergrösserung des Füllvolumens eines Depotbehälters bzw. zur Einsparung von Höhe in einem Sortierschacht. Wie sich herausgestellt hat, muß dann eine Flasche in einer nicht unterschreitbaren Entfernung von ihrem Boden zwischen diesem und dem Hals horizontal auf die Schneide des Beils treffen. Nur dann wird der überwiegende Teil des angelieferten Hohlglases zertrümmert. Mit diesem Ziel schlägt die Erfindung die Merkmale des Patentanspruches 4 vor.

Hierbei wird, insbesondere bei gleichzeitiger Verwirklichung der Merkmale des Patentanspruches 5, mit der Schwenkklappe, die die Farbsortierung rechtzeitig in das Obertrum des Stetigförderers einschwenkt, der sortierte Hohlglaskörper aus seiner Bewegungsrichtung auf dem Stetigförderer im spitzen Winkel abgelenkt. Mit dem Rest seiner Bewegungsenergie gelangt er in den Trichter. Durch den Anstieg des Trichters wird die Restenergie verbraucht, bis der Hohlglaskörper ruhig liegt. Erst dann öffnet sich die Schwinge des Trichters. Der gegenüber der Schneide des Beiles ausgerichtete Hohlglaskörper durchfällt eine vorher berechnete Bewegungsbahn, die auf die Schneide gerichtet ist. Sie gewährleistet, daß der überwiegende Teil des Hohlglases zertrümmert wird. Der zurückgewonnene Rohstoff hat dann ein hohes Raumgewicht, das z.B. beica. 750 kg je cbm liegen kann.

Ein ähnliches Ergebnis erreicht die Ausführungsform der Erfindung gemäß dem Patentanspruch 6. Die Ausrichtung des von dem Förderer abgelenkten Hohlglaskörpers erfolgt hierbei mit einer Sperrklappe auf dem Förderer gegenüber einer Schräge, über die der ausgerichtete Hohlglaskörper auf die Beilschneide trifft. Bei diesen Ausführungsformen der Erfindung muß allerdings dafür gesorgt werden, daß sich die Schwenkklappe beim Auswurf des Hohlglaskörpers parallel zu sich selbst bewegt und daß sie den Hohlglaskörper nur in Richtung der Schräge auswerfen kann.

Sind die Kammern als Fallschächte ausgebildet, so wird man die Erfindung in der Regel bereits in der Nähe des Altglashändlers bzw. -verwenders verwirklichen. Handelt es sich jedoch um einen Depotbehälter, dann muß dieser Behälter je nach der Menge des anfallenden Abfallhohlglases in Abständen entleert und das sortierte Altglas nach Sorten streng getrennt abtransportiert werden. Das muß in der Regel mit Straßenfahrzeugen geschehen. Erfindungsgemäß ist der Behälter vorzugsweise so ausgebildet, daß er an Ort und Stelle entleert und deshalb nicht selbst transportiert werden muß, um das Taragewicht bei dem Abtransport niedrig zu halten. Da dann der Behälter anhebbar sein muß, ist es auch mit Rücksicht auf das beschriebene erhöhte Raumgewicht seines Inhaltes erforderlich, daß er eine mit einem Hebezeug, z.B. einem Aufbaukran eines Lkw handhabbare Größe aufweist.

Ein Behälter, der diesen Anforderungen entspricht, ist ebenfalls Gegenstand der Erfindung. Er ist auch außerhalb der Hohlglassammlung verwendbar, bildet aber daneben auch eine zweckmäßige Ausführungsform der Erfindung, welche im Anspruch 8 und in den folgenden Ansprüchen 9 bis 12 wiedergegeben ist.

Ein solcher Behälter berücksichtigt durch die Größe seiner Kammern einerseits die relativen Mengen der erfahrungsgemäß anfallenden farbigen Gläser und damit die Größe der Speicherräume der nach Farben getrennten Gläser. Er ermöglicht andererseits einen Stetigförderer hinreichender Länge, der unter dem Deckel des Behälters, untergebracht werden kann, ohne daß die Baueinheit des Behälters ein zu großes Volumen annimmt. In dem Behälter ist außerdem und zwar in der Mitte eine Längskammer für die Aufnahme von Nichtglas untergebracht, so daß auch diese Stoffe im Behälter untergebracht und ohne Schaden für die verwertbaren Rohstoffe getrennt gehälten und abtransportiert werden können. Das ganze bildet eine Baueinheit, die auch mit Fallschächten ausführbar ist, sich aber ohne weiteres mit einem Aufbaukran bei Füllungmit Glas manipulieren läßt.

Obwohl der Stetigförderer und die Farbsortierung nur wenig Strom verbrauchen, ist es zweckmäßig, den Behälter mit einer Eigenstromversorgung, beispielsweise über eine Batterie zu versehen. Hierauf richtet sich der Anspruch 9, welcher hierfür den sonst nicht nutzbaren Platz unmittelbar an der Stirnwand des Behälters vorsieht.

Beim Abtransport des Behälterinhaltes muß sichergestellt sein, daß die bereits sortierten Gläser nicht mehr, auch nicht teilweise miteinander vermischt werden können. Kippt man den Behälter, um ihn zu entleeren, läßt sich das nicht zuverlässig vermeiden. Deswegen ist bei der erfindungsgemäßen Ausführungsform nach dem Patentanspruch 10 vorgesehen, den Behälter als Bodenentleerer auszubilden. Dieser braucht lediglich auf die Höhe des Transportfahrzeuges angehoben zu werden, bevor sich seine Klappen öffnen.

Zweckmäßig wird dieser Vorgang nicht der Willkür einer Bedienungsperson überlassen, sondern mechanisch ausgelöst. Erfindungsgemäß dient dazu eine Übergabeeinrichtung, welche Gegenstand des Anspruches 11 ist. Sie ermöglicht außerdem die gleichzeitige Entleerung aller Kammern und vermeidet so, daß einzelne Kammern irrtümlich über den Inhalt bereits entleerter Kammern ausgeschüttet werden.

Bei Verwendung einer derartigen Übergabeeinrichtung wird der Depotbehälter von oben in den Zentriertrichter der Übergabeeinrichtung abgesenkt und betätigt durch sein Eigengewicht die von den Nocken erzwungene Auslenkung der Klappenscharniere nach Entsperrung der Klappenriegel. Der Kammerinhalt wird von den Trennwänden der Übergabeeinrichtung erfaßt, so daß sich die Scherben nicht miteinander mischen können.

Zweckmäßig kann die Übergabevorrichtung auf einem Transportsilo oder einer Ladepritsche eines Lkw angebracht sein, wobei der Transportsilo und die Ladepritsche die gleiche Aufteilung wie der Depotbehälter haben.

Sofern Transportsilos verwendet werden, haben diese den Vorteil, daß sie einzeln von einem Kurz-Lkw zu den Depotbehältern gefahren werden können. Solche Fahrzeuge sind auch in Innenstädten zugelassen, haben aber ein verhältnismäßig geringes Netto-Ladevermögen. Erfindungsgemäß werden sie deswegen zusammen mit einem Anhänger verwendet, der einen oder mehrere Transportsilos trägt, welche nacheinander von dem Kurz-Lkw aufgenommen und gefüllt, sowie zurückgebracht werden. Ein solcher Anhänger kann außerhalb der Innenstadt aufgestellt und in dem Kurz-Lkw zu einem Zug zusammengestellt werden.

Im folgenden werden Ausführungsbeispiele der Erfindung beschrieben; es zeigen
- Fig. 1: einen Depotbehälter gemäß der Erfindung in Stirnansicht,
- Fig. 2: schematisch den Depotbehälter nach Fig.1 in Draufsicht zur Wiedergabe seiner Vereinzelungsvorrichtung und seiner Aufteilung,
- Fig. 3: eine Teildarstellung zur Wiedergabe einer Trichterschwinge,

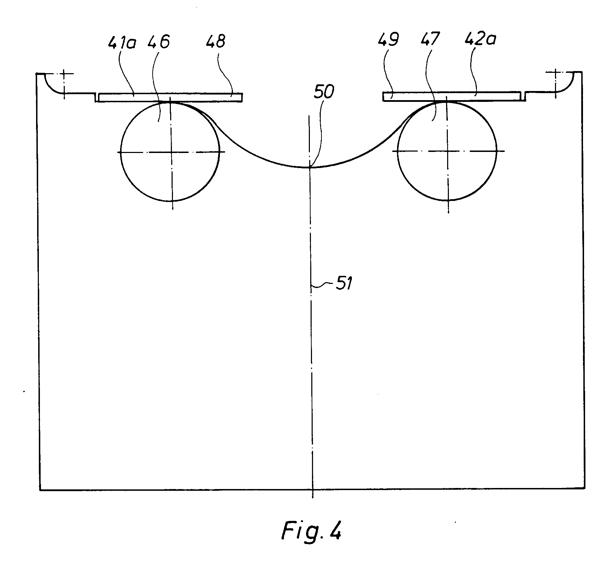

- Fig. 4: einen Stetigförderer gemäß der Erfindung im Querschnitt,
- Fig. 5: einen Stetigförderer gemäß der Erfindung in Seitenansicht mit einer ersten Ausführungsform von Schwenkklappen,
- Fig. 6: eine Draufsicht auf den Gegenstand der Fig. 5,
- Fig. 7: eine Stirnansicht des Gegenstandes nach den Fig. 5 und 6,
- Fig. 8: in der Fig. 1 entsprechender Darstellung einen als Bodenentleerer ausgebildeten Behälter gemäß der Erfindung,
- Fig. 9: in teilweise abgebrochener Darstellung die Bodenklappenanlenkung des Gegenstandes nach Fig. 8,
- Fig. 10: in abgebrochener Darstellung die Bodenklappenentriegelung des Behälters nach Fig. 8,
- Fig. 11: oben in Draufsicht und unten in Ansicht eine Übergabeeinrichtung gemäß der Erfindung,
- Fig. 12: die Übergabeeinrichtung nach Fig. 11 in einer Ansicht von unten,

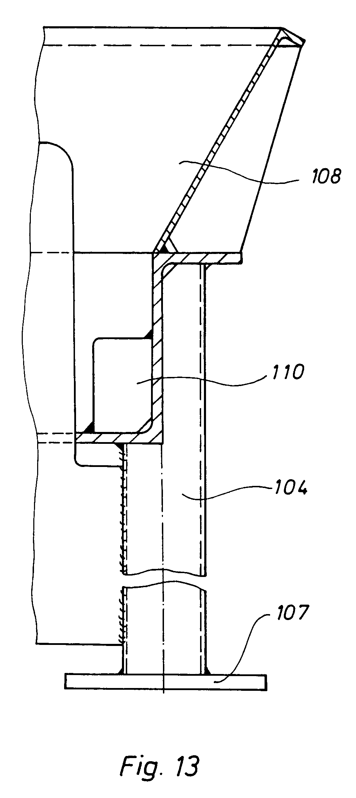

- Fig. 13: eine Einzelheit der Übergabeeinrichtung an der durch einen Kreis in der unteren Darstellung der Fig. 11 gekennzeichneten Stelle,
- Fig. 14: oben die Klappenentriegelung teilweise im Schnitt, unten eine Draufsicht auf die Klappenentriegelung,
- Fig. 15: eine Einzelheit des Klappenscharniers in Ansicht und in abgebrochener Darstellung und
- Fig. 16: schematisch die Übergabeeinrichtung gemäß der Erfindung auf der Ladefläche eines Lkw.

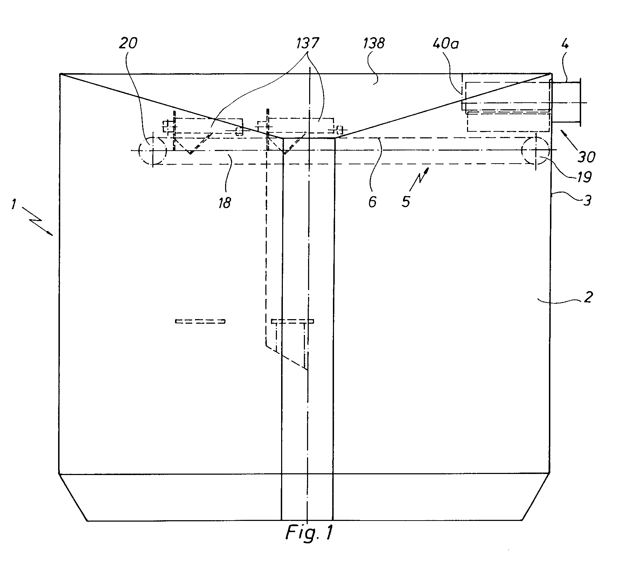

Der in Fig. 1 wiedergegebene Abfallhohlglassammler (1) ist als Depotbehälter (2) ausgeführt. An seiner Stirnseite (3) weist er eine Einwurföffnung hinter einem vorstehenden Einwurfrohr (4) auf, das mit einer Blende oder einer geschlitzten Gummimembran verschlossen ist. Unter der Einwurföffnung befindet sich eine allgemein mit (5) bezeichnete Vereinzelungsvorrichtung, welche mit einer nicht dargestellten Farbsortierung zusammenwirkt.

Die Farbsortierung besteht aus einer Lichtquelle und einem Aufnehmer, welcher das Licht nach den drei Hohlglasfarben weiß, braun, grün trennt und danach ein elektrisches Signal auslöst, welches eine Drehklappe betätigt, die ein nach seiner Farbe erkanntes Hohlglas auswirft.

Gemäß dem dargestellten Ausführungsbeispiel ist der Behälter in Kammern (7-9) unterteilt, die in einer Baueinheit zusammengefaßt sind. Diese weist einen gemäß dem Ausführungsbeispiel quadratischen Grundriß auf. In der einen Diagonale verläuft eine Kammertrennwand (10), welche praktisch eine Hälfte des Behälters einer Kammer (7) für Weißglas vorbehält. In der anderen Diagonale verlaufen zwei parallele Kammerwände (13, 14) bis zur Wand (10). Sie dienen zur Abteilung einer Längskammer (15), die bis zur Behältermitte reicht und zur Bildung der beiden Kammern (8 und 9), die Braun- bzw. Grünglas aufnehmen. Die Längskammer (15) dient zur Aufnahme von Nichtglas.

Ein Stetigförderer (16) ist mit der Diagonalen ausgefluchtet, der die Kammerwände (13 und 14) parallel sind. Er befindet sich deshalb über der Längsmitte (17) der Längskammer (15).

Gemäß der Darstellung der Fig. 1 handelt es sich bei dem Stetigförderer (16) um ein Förderband (18), das mit seiner Antriebsrolle (19) unmittelbar hinter der Stirnwand (3) angeordnet ist und das mit seiner Umkehre (20) im Abstand von der hinteren Stirnwand (21) des Behälters endet. Durch die Öffnung (22) zwischen der hinteren Stirnwand (21) und der Umkehre (20) wird Nichtglas in die Kammer (15) abgeworfen.

Der Stetigförderer ist im wesentlichen horizontal angeordnet.

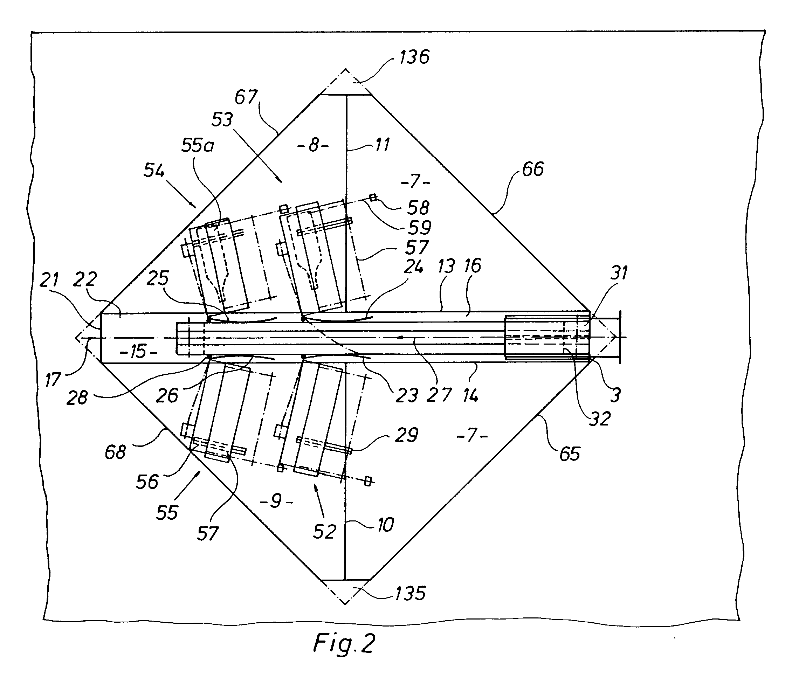

Gemäß der Ausführungsform der Fig. 2 ist zur Beschickung der Kammern mit den Gläsern am Stetigförderer (16) ein seitlicher Auswurf vorgesehen. Dazu dienen von der nicht dargestellten Farbsortierung betätigte Schwenkklappen, die im Ausführungsbeispiel der Fig. 2 in Draufsicht und in ausgeschwenkter Position neben dem Förderband bei (23-26) gezeichnet sind. Die Schwenkklappen sind im Ausführungsbeispiel der Fig. 2 in ihrer Ebene und in Förderrichtung, die durch den Pfeil (27) dargestellt ist, konvex gekrümmt. Sie schwingen um jeweils senkrechte Achsen, wie bei (28) für die Schwenkklappe (26) dargestellt, sobald sie in Auswurfstellung verbracht werden. In strichpunktierter Linienführung ist die Auswurfstellung der Schwenkklappe (24) gezeichnet.

Unter jeder Schwenkklappe befindet sich, wie beispielsweise bei (29) in Fig. 2 dargestellt, ein Beil. Das Beil hat eine nach oben gerichtete Schneide, die zur Zerstrümmerung eines Hohlglaskörpers dient, der von einer der Schwenkklappen abgelenkt worden ist.

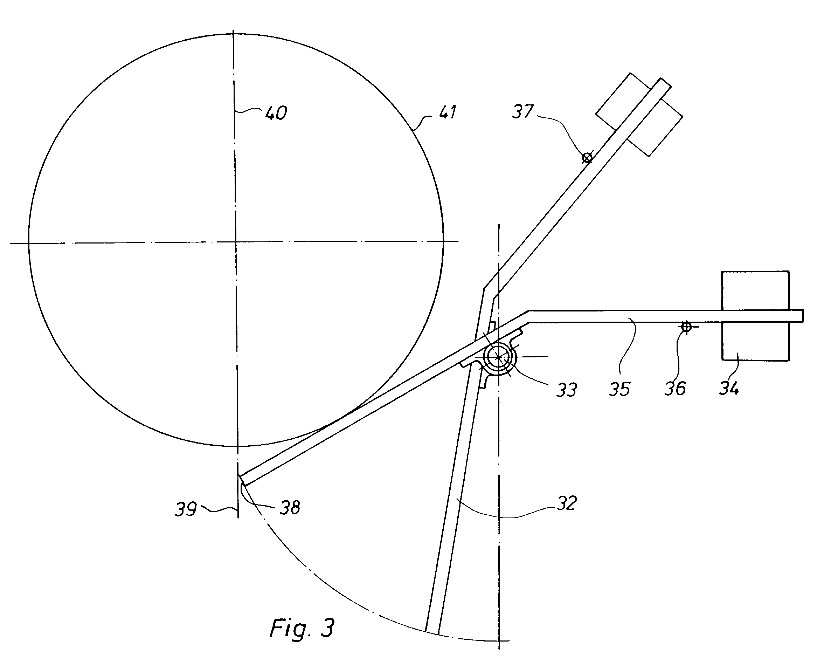

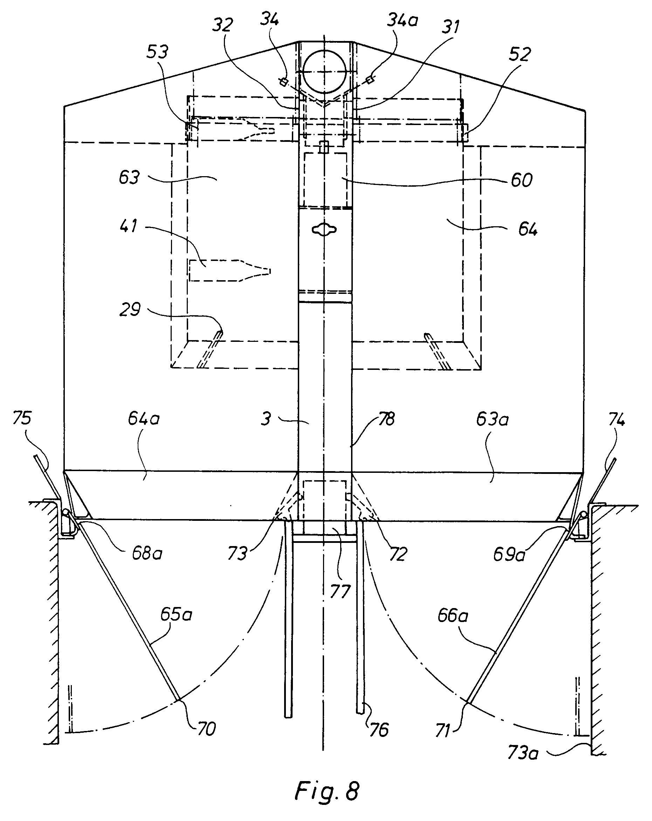

Unter der Einwurföffnung hinter dem Einwurfrohr (4) befindet sich eine Hohlglasübergabe, welche allgemein bei (30) in Fig. 1 gezeichnet ist. Es handelt sich hierbei um einen Aufnahmetrichter, welcher von zwei Längswänden (31, 32) gebildet wird, die nach Fig. 8 beide als Trichterschwingen ausgebildet sind. In der Fig. 3 ist eine der Trichterschwingen (32) gezeichnet. Sie sitzt auf einem Scharnier (33) und weist einen mit einem Gewicht (34) belasteten Arm (35) auf, mit dem sie in Schließrichtung vorgespannt ist. Der Arm begrenzt die Schwenkbewegung, indem er auf Anschläge (36, 37) trifft. Das innere Ende (38) der Schwenkklappe (32) schließt einen Schlitz, dessen Mittellinie (39) gezeichnet ist und mit der Längsmittelebene (40) eines Hohlglasbehälters (41) übereinstimmt. Der Längsschlitz (39) wird von der anderen Trichterschwinge (31) begrenzt.

Die Stirnwand des Trichters ist bei (40a) in Fig. 1 dargestellt und liegt oberhalb der beschriebenen Trichterwände. Sie dient als Prallwand, wenn das Hohlglas durch das Rohr (4) eingeworfen wird, wodurch der Hohlglasbehälter (41) seine aus Fig. 3 ersichtliche Lage auf den Trichterschwingen (31, 32) einnimmt. Dann drückt er mit seinem vollen Gewicht auf die Schwingen (31, 32) die dadurch ausgelenkt werden, bis der jeweilige Arm (35) den Anschlag (37) erreicht. Dann fällt der Hohlglasbehälter (41) auf das Förderband (18). Sobald der Hohlglasbehälter den Trichter verlassen hat, schließen die Schwingen automatisch.

Diese Schwingenbewegung kann auch zum Einschalten des Stromes für die Farbsortierung und die Vereinzelungsvorrichtung (5) genutzt werden. Dann wird die zur Verfügung stehende Energie sparsam ausgenutzt, weil das Band nur läuft, wenn ein Hohlglas eingeworfen worden ist.

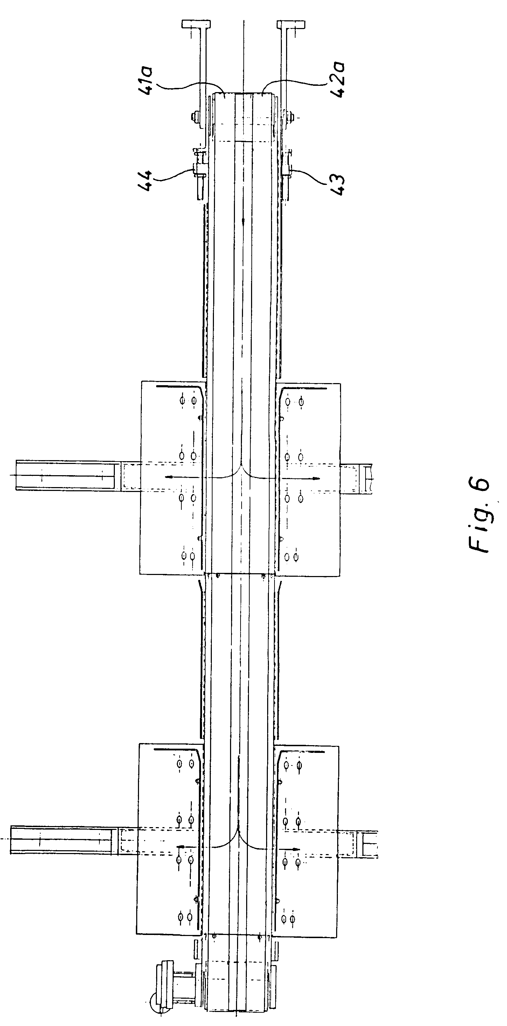

Die Ausführung des Stetigförderers ergibt sich insbesondere aus der Darstellung der Fig. 6. Danach ist das Förderband auf ein Paar von parallelen Gurten (41a, 42a) aufgeteilt. Die Umkehre läßt sich bei (43 und 44) spannen und schwenken, so daß beide Gurte (41a und 42a) absolut parallel über die Umkehre und die Antriebsrolle laufen.

Die beiden Gurte (41a und 42a) sind im Obertrum auf einer Führung abgestützt. Die Führung besteht gemäß dem dargestellten Ausführungsbeispiel aus einem jedem Gurt (41a, 42a) zugeordneten Rohr (46, 47), wobei beide Rohre parallel verlegt sind. Normalerweise laufen die Gurte (41a und 42a) infolge ihrer Eigensteifigkeit in einer gemeinsamen Ebene. Sobald aber die inneren Gurtkanten (48, 49) von einem Hohlglas belastet werden, werden sie nach unten gedrückt, wodurch sich eine Mulde einstellt, die bei (50) angedeutet ist. Deswegen werden die Hohlgläser in der Längsmitte (51) des Förderbandes (18) zentriert. Diese Zentrierung erlaubt es, unmittelbar hinter dem Aufnahmetrichter (31, 32) die Lichtquelle der Farbsortierung anzuordnen.

Da die Breite der Gurte (41a, 42a) nicht ausreicht, um eine Mulde (50) vollständig zu schließen, ergibt sich ein auf der Länge der Rohre in der Längsmitte (51) verlaufender Schlitz. Durch diese Öffnung kann die Lichtquelle das Hohlglas durchstrahlen, so daß die Lichtquelle raumsparend unter dem Förderband angeordnet werden kann. Die Mulde (50) wird außerhalb der Rohre von einer einteiligen Gurtführung des Obertrums (6) gebildet.

Gemäß dem Ausführungsbeispiel der Fig. 2 lenken die um senkrechte Achsen (28) schwingenden Schwenkklappen (23-26) die Hohlgläser (41) in jeweils einen Trichter (52-55). Diese Trichter sind einheitlich ausgebildet. Sie haben einen schräg nach oben gerichteten Boden, der aus einem Paar von Schrägwänden (56, 57) besteht, von denen wenigstens eine, nämlich die mit (57) bezeichnete Schrägwand gegen einen mit einem Gewicht (58) belasteten Schwenkarm (59) nach unten ausschwenken kann. Sie gibt dann einen Längsschlitz frei, durch den ein Hohlglaskörper (55a) nach unten fällt. Dieser Schlitz schließt mit der Förderrichtung einen stumpfen Winkel ein. Hierdurch ergibt sich ein Rest von Bewegungsenergie, der dafür sorgt, daß der Hohlglaskörper (55a) den Trichter zuverlässig erreicht, sich aber im Trichter ausrichtet, d.h. nicht über den Trichter hinausgelangen kann und im Trichter dann etwa horizontal liegt. Der so ausgerichtete Hohlglaskörper befindet sich mit seinem Boden in genauem Abstand von der Schneide (29), so daß er bei Öffnung der Klappe (57) von dieser zerstört wird.

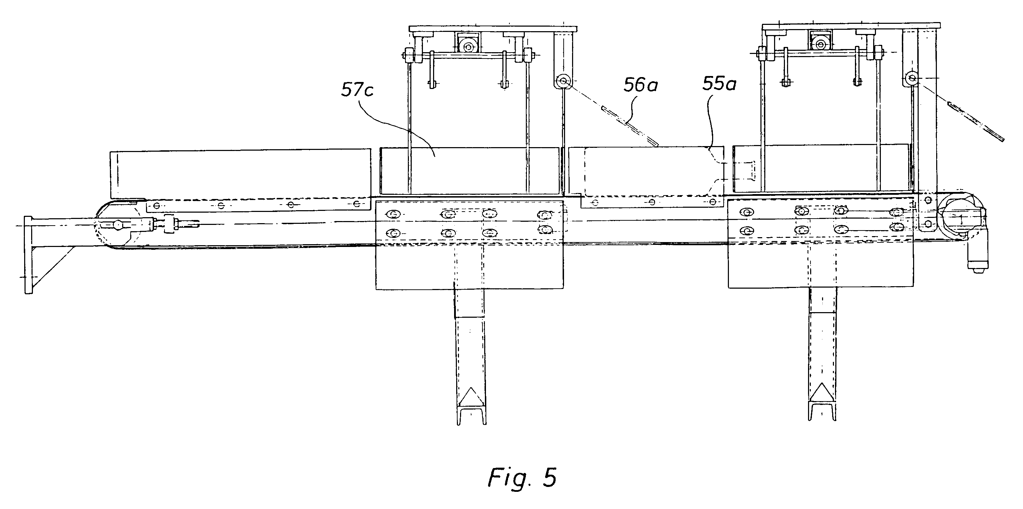

Im Ausführungsbeispiel der Fig. 5 wird dagegen eine quer zum Stetigförderer und ihrer Ebene orientierte Sperrklappe (56a) benutzt, um zunächst einen Hohlkörper anzuhalten, der dann mit einer doppelten Schwenkklappe (57c) den Hohlglaskörper (55a) quer zum Band nach einer von zwei Seiten abgelenkt wird. Auf diese Weise lassen sich jeweils zwei nebeneinanderliegende Kammern oder Kammerräume des Depotbehälters füllen.

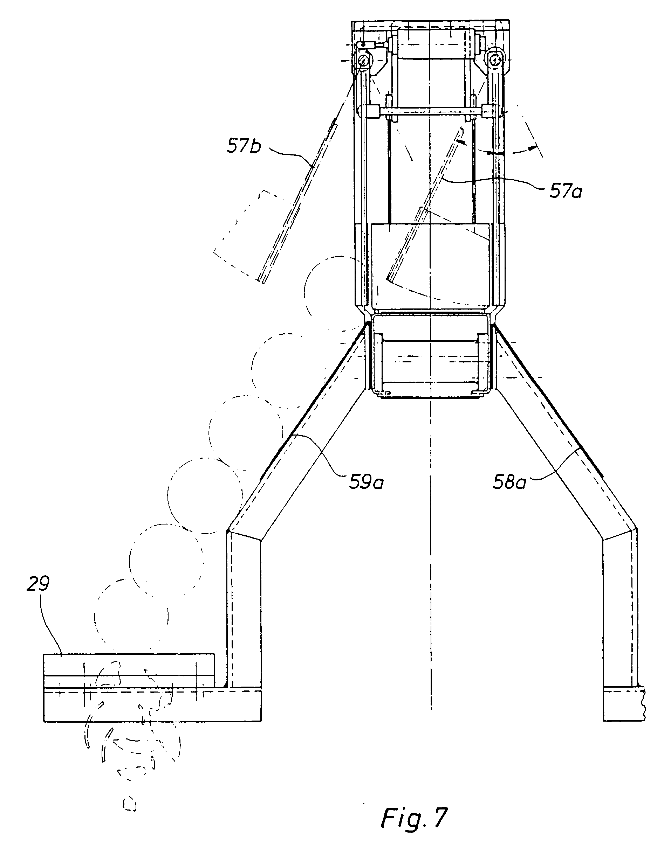

Die Darstellung der Fig. 7 zeigt die beiden Schwenkklappen (57a, 57b), die die Doppelklappe bilden. Unter den Schwenkklappen ist je eine Schräge (58a, 59a) angeordnet, die als tote Rutsche das abgelenkte Hohlglas weiterfördert, das dadurch auf das Beil (29) gelenkt und zertrümmert wird.

Der in der Fig. 8 wiedergegebene Behälter läßt hinter der vorderen Stirnwand (3) das Abteil für eine Batterie (60) sowie die beiden Trichterwände (31, 32) erkennen, welche gegen die Wirkung von Gewichten (34, 34a) auslenkbar sind. Strichpunktiert ist die Fallrichtung der Hohlglasbehälter (41) wiedergegeben, die dementsprechend in bestimmtem Abstand von ihrem Boden bzw. ihrem Hals auf die Schneiden der Beile (29) fallen. Diese Beile und die beschriebenen Trichter (52, 53) befinden sich über bzw. am Boden von kurzen Aussparungen (63, 64), wodurch die Füllung der Kammern verbessert wird.

Die senkrechten Außenwände (65-67) des Depotbehälters sind mit Auslauftrichtern versehen, die in der Fig. 8 bei (63a und 64a) gezeichnet sind. Jede Kammer hat eine Bodenklappe (65a, 66a), die an ihrer Außenkante (68a, 69a) in Scharnieren liegt, welche in Schließrichtung vorgespannt sind. Die inneren Enden (70, 71) der Bodenklappen (65a, 66a) lassen sich mit Riegeln (72, 73) in der geschlossenen Stellung sperren.

In der Fig. 8 ist ein Entleerungsschacht (73a) gezeichnet, der an seinem oberen Ende einen Führungstrichter mit Schrägwänden (74, 75) aufweist. In der Mitte ist der Schacht mit einer stationären Säule (76) versehen, deren oberes Ende (77) in ein Vierkantrohr (78) des Behälters eingespurt werden kann. Das ebenfalls als Vierkantrohr ausgebildete Ende (77) lenkt dann die Riegel (72 und 73) aus, wobei gleichzeitig die Bodenklappen (65a, 66a) gegen ihre Federn ausgelenkt werden.

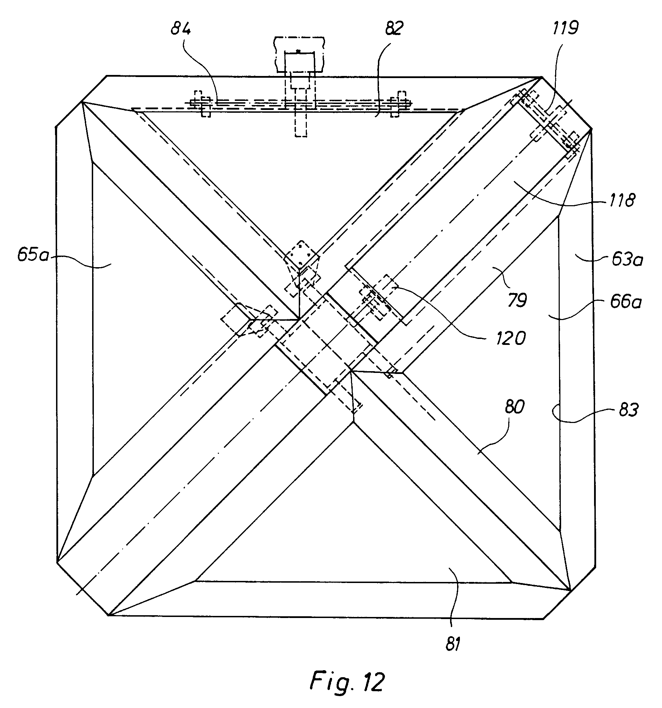

Die Bodenklappen (65a und 66a) sind aus der Fig. 12 ersichtlich und weisen bei den Glaskammern einen nach einem gleichschenkligen Dreieck geformten Umriß auf. Die Trichterwände sind für die Bodenklappe (66a) bei (63a, 79 und 80) gezeichnet. Die Bodenklappen (65a, sowie 81 und 82) sitzen unter identischen Auslauftrichtern.

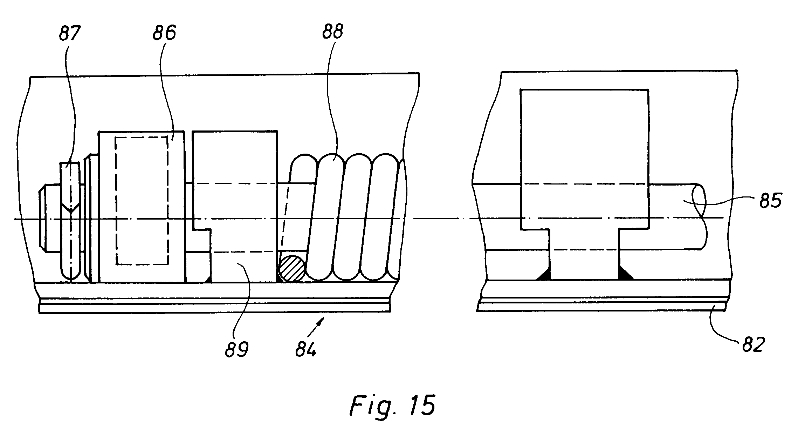

Die längeren Klappenkanten (83) liegen außen und in den Scharnieren, die im Zusammenhang mit der Fig. 8 beschrieben sind. Für die Klappe (82) ist das Scharnier bei (84) strichpunktiert wiedergegeben. Die Einzelheiten ergeben sich aus der Darstellung der Fig. 15. Danach ist die Scharnierachse (85) in Lagerböcken (86) untergebracht und mit Federringen (87) gesichert. Auf die Bodenklappe (82) drückt eine Wendelfeder (88), deren Kraft so ausgelegt ist, daß die Bodenklappe (82) normalerweise geschlossen gehalten wird. Auf der Bodenklappe sitzen die Lagerböcke (89), welche sich um die Achse (85) drehen.

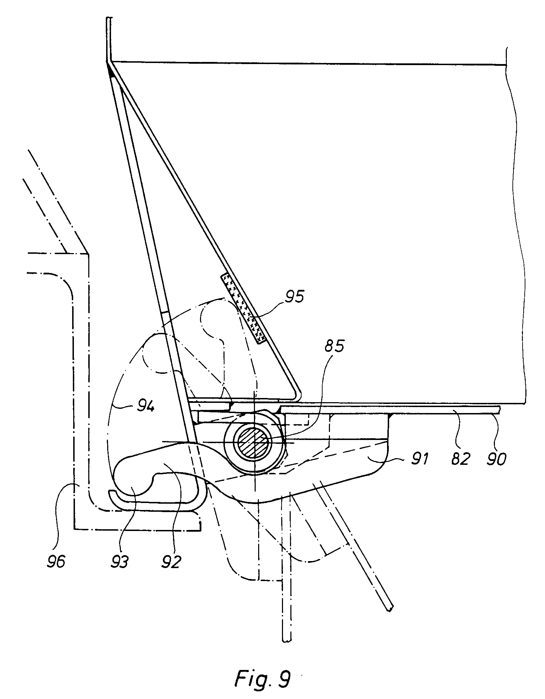

Gemäß der Darstellung der Fig. 9 ist auf der Unterseite (90) der Klappe (82) ein Nocken (91) befestigt, welcher mit der Klappe (82) schwenkt. Der Nocken (91) hat einen nach außen vorstehenden Arm (92) mit einem abgerundeten Kopf (93). Er läßt sich über den Bogen (94) bis zu einem Anschlag (95) verschwenken, sobald der Nocken (93) auf einen Träger (96) trifft, der unterhalb der Schrägwände (74, 75) angeordnet ist. Die Bewegung des Nockens (91) über den Bogen (94) wird mit dem Gewicht des Depotbehälters erzwungen.

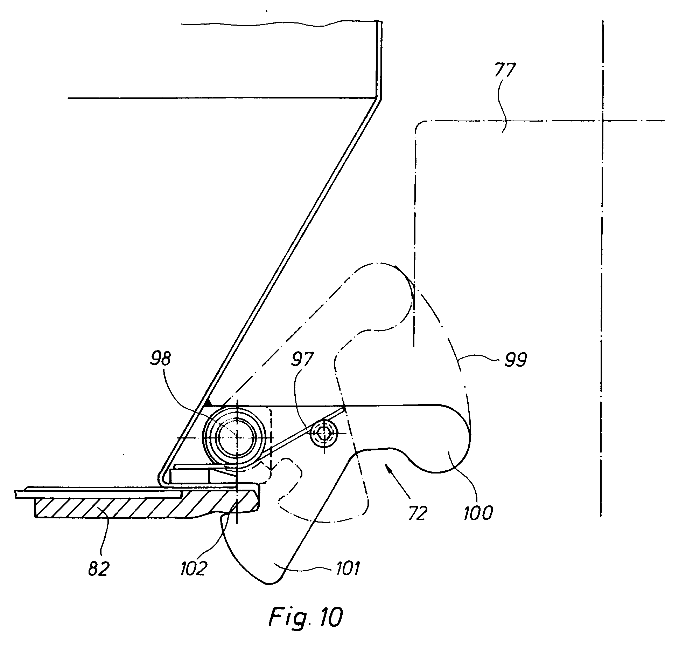

Die Abstützung der Schwenkklappen im Scheitel ihres Umrisses ist aus der Fig. 10 ersichtlich. Der dort dargestellte Riegel (72) ist gegen die Kraft einer Feder (97) um eine feste Achse (98) über den Bogen (99) verschwenkbar, sobald sein abgerundeter Kopf (100) von dem Vierkant (77) der Säule (76) ausgelenkt worden ist. Sein innerer Arm (101) gibt dann die Spitze (102) der Klappe (82) frei, die deshalb ausschwenken kann.

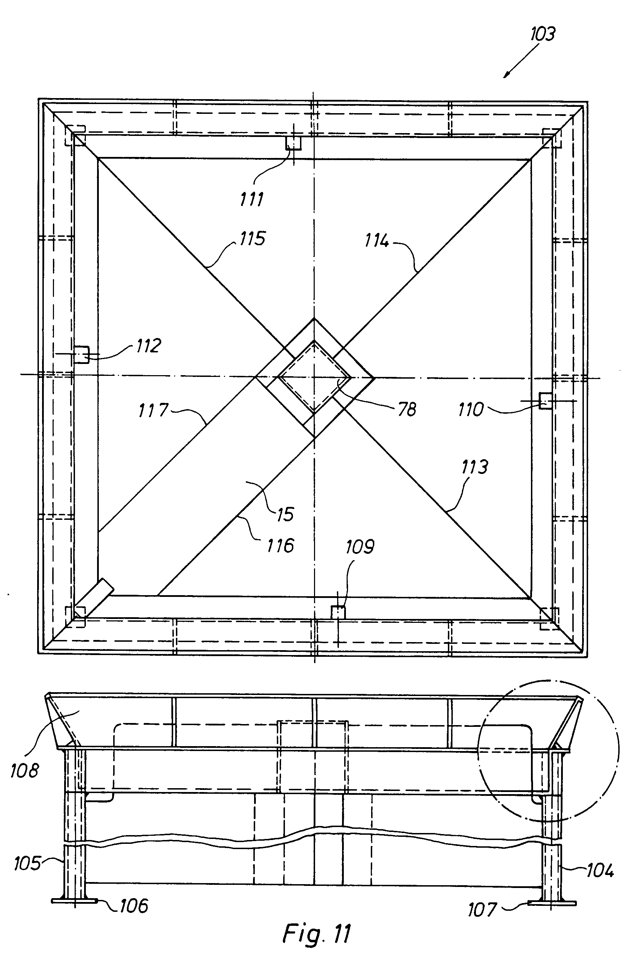

In den Fig. 11 und 12 ist eine Übergabeeinrichtung (103) gezeichnet, welche der im Zusammenhang mit der Darstellung der Fig. 8 erläuterten Schachtanordnung (73a) übereinstimmt. Im Gegensatz zu dieser ruht sie auf vier Stützen (104, 105), welche mit Bodenplatten (106 und 107) versehen sind. Die Übergabeeinrichtung (103) hat einen oben liegenden Zentriertrichter (108), der zum Einspuren des Depotbehälters dient. An den Trichterwänden sind feststehende Anschlagnocken (109 bis 112) angebracht, welche den Anschlagprofilen entsprechen, die im Zusammenhang mit der Trichteranordnung der Fig. 8 beschrieben sind.

Die Übergabeeinrichtung (103) weist außerdem Wände (113-115) auf, welche mit den Kammerwänden (10 und 11) ausgefluchtet werden können. Mit den Kammerwänden (13 und 14) sind die Wände (116, 117) ausfluchtbar, weil die Kammer (15) nur bis zur Mitte des Vierkantrohres (78) durchgeführt worden ist, so daß sich eine mit der Wand (114) ausfluchtbare Kammerwand im Depotbehälter ergibt.

Die Kammer (15) weist eine rechteckige Bodenklappe (118) auf. Die Bodenklappe läßt sich um ein Scharnier (119) ausschwenken, welches seinem Aufbau nach dem Scharnier (84) entspricht. Sie kann mit einem Riegel (120) ausgelöst werden, der von der Säule (78) betätigt wird.

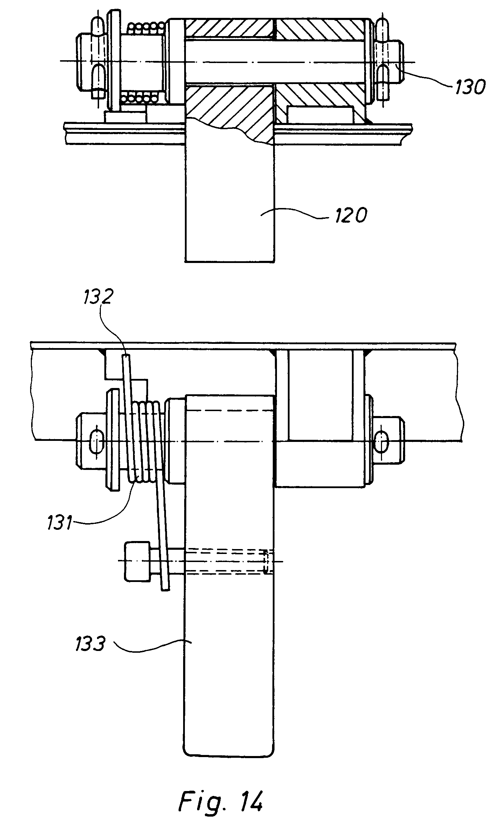

Dieser Mechanismus ist in der Fig. 14 gezeichnet. Danach greift der Riegel (120) unter die Bodenplatte und sitzt auf einer Scharnierachse (130). Diese durchdringt die Wendel (131) einer Feder, welche mit einem Arm (132) am festen Teil des Scharniers und mit ihrem anderen Teil an dem die Bodenklappe untergreifenden Arm (133) des Riegels festgelegt ist.

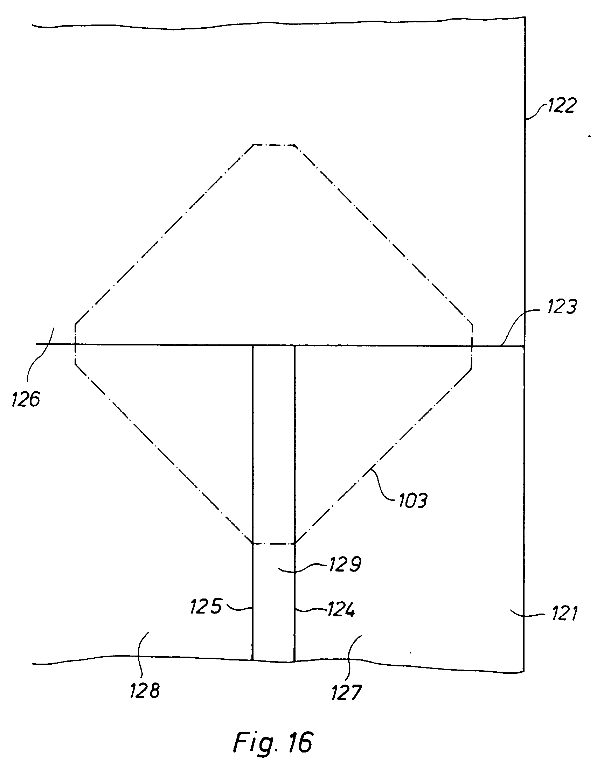

In die Übergabeeinrichtung (103) ist, wie aus Fig. 16 ersichtlich, auf der Plattform (121) eines Pritschenaufbaus (122) eines im übrigen nicht dargestellten Lkw's aufgestellt. Diese Pritsche weist Trennwände (123, sowie 124 und 125) auf, welche die inneren Begrenzungen von Abteilen (126) für Weißglas, (127 und 128) für Buntglas, sowie (129) für Nichtglas bilden.

Der Depotbehälter (2) hat eine hohe Formsteifigkeit. Daher können in den Ecken (135, 136) (Fig. 2) Handhaben (137) in Aussparungen des Deckels (138) (Fig. 1) befestigt werden, mit denen der Behälter (2) mit einem Krangeschirr angehoben werden kann, ohne daß im Behälter Verstärkungen erforderlich sind.

Der beschriebene Behälteraufbau kann daher auch für andere Abfallstoffe Verwendung finden.

## Patentansprüche

1. Abfallhohlglassammler (1) mit Vereinzelungsvorrichtung (5) und Farbsortierung, in der die Abfallhohlgläser nach ihrer Farbe erkannt werden, mit einer Einwurföffnung (4) und mehreren Abteilen (6-9, 15), welche für jede Hohlglassorte vorgesehen sind, wobei die Vereinzelungsvorrichtung (5) aus einem im wesentlichen horizontalen Stetigförderer (16) mit seitlichem Auswurf durch von der Farbsortierung betätigte Abwurfelemente (23 - 26) besteht, dadurch gekennzeichnet, daß die Abwurfelemente als Schwenkklappen (23 - 26) ausgebildet sind und seitlich unter jeder Schwenkklappe (23 - 26) ein feststehendes Beil (29) angeordnet ist, welches eine nach oben gerichtete Schneide aufweist und zur gezielten Zertrümmerung der ausgeworfenen Hohlgläser dient.

2. Abfallhohlglassammler nach Anspruch 1, dadurch gekennzeichnet, daß unter der Einwurföffnung (4) eine Hohlglasübergabe (30) auf den Stetigförderer (16) angeordnet ist, welche einen Aufnahmetrichter (31, 32) aufweist, dessen Längswände einen sich in Verlängerung der Einwurfrichtung erstreckenden Übergabeschlitz (39) begrenzen, wobei wenigstens eine der Längswände als Schwinge (38) ausgebildet ist, die in Schließrichtung der Trichteröffnung gewichtsbelastet ist, und daß in Verlängerung der Einwurföffnung (4) über dem Trichter eine Prallwand (40a) angeordnet ist.

3. Abfallhohlglassammler nach einem oder beiden der Ansprüche 1 oder 2, dadurch gekennzeichnet, daß der Stetigförderer (16) als Förderband (18) ausgebildet ist, dessen Förderorgan aus einem Paar von parallelen Gurten (41a, 42a) besteht, die im Obertrum die Längsseiten einer Mulde (50) bilden.

4. Abfallhohlglassammler nach einem oder mehreren der Ansprüche 1 bis 3, dadurch gekennzeichnet, daß die Schwenkklappen (23, 26) um senkrechte Achsen (28) neben dem Stetigförderer (16) schwingen und zur Ablenkung der Hohlgläser in Trichter (52-55) dienen, deren Boden schräg nach oben gerichtet ist und von einem Paar von Schrägwänden (56, 57) gebildet wird, von denen wenigstens eine als gewichtsbelastete Schwinge ausgebildet ist und einen Längsschlitz freigibt, der mit der Förderrichtung einen stumpfen Winkel einschließt.

5. Abfallhohlglassammler nach einem oder mehreren der Ansprüche 1 bis 4, dadurch gekennzeichnet, daß die Schwenkklappen (23, 26) in Förderrichtung konvex gekrümmt sind.

6. Abfallhohlglassammler nach einem oder mehreren der Ansprüche 1 bis 3 oder 5, dadurch gekennzeichnet, daß die Achsender Schwenkklappen (57a, 57b) eben und mit der Förderrichtung ausgefluchtet sind, wobei neben dem Förderband eine stationäre Schräge (58a, 59a) welche auf die Beilschneide gerichtet ist und quer zum Förderer eine Sperrklappe (56a) angeordnet ist, die zum Ausrichten des Hohlglases (55a) gegenüber der Schwinge (58, 59) dient.

7. Abfallhohlglassammler nach einem oder mehreren der Ansprüche 1 bis 6, dadurch gekennzeichnet, daß die unter den Schwenkklappen (23-26) angeordneten Trichter (52-55) und die Schneiden der Beile (29) in Aussparungen der Fallschacht- bzw. der Kammerwand untergebracht sind.

8. Abfallhohlglassammler nach einem oder mehreren der Ansprüche 1 bis 7, dadurch gekennzeichnet, daß die Kammern (6-9) eine Baueinheit mit viereckigem bis quadratischen Grundriß und in den Diagonalen angeordneten Kammerwänden (10-14) bilden, wobei der Stetigförderer (16) mit einer der Diagonalen ausgefluchtet ist, längs der mit parallelen Kammerwänden bis zur Behältermitte eine Längskammer (15) für die Aufnahme von Nichtglas abgeteilt ist, die über die Umkehre (20) des Stetigförderers (16) beschickt wird, wobei die Kammer (7) für Weißglas von den Außenwänden (65, 66) und einer Kammerwand (11, 12) begrenzt ist, die sich quer zur Förderrichtung über die volle Länge der Diagonale erstreckt.

9. Abfallhohlglassammler nach einem oder mehreren der Ansprüche 1 bis 8, dadurch gekennzeichnet, daß von der Weißglaskammer (7) ein unter der Einwurföffnung angeordnetes Abteil zur Unterbringung einer Stromversorgung (16) abgetrennt ist.

10. Abfallhohlglassammler nach einem oder mehreren der Ansprüche 1 bis 9, dadurch gekennzeichnet, daß die Kammern (6, 7, 8, 9, 15) mit Bodenklappen (65a, 66a, 80, 81, 118) verschlossen sind, deren Scharniere (82) an den Außenwänden (65-68) der Baueinheit angeordnet und in Schließrichtung federnd vorgespannt sind, und daß die inneren Klappenenden (70, 71) auf Riegeln (72, 73) abgestützt sind, die gegen Federvorspannung auslenkbar sind.

11. Abfallhohlglassammler nach einem oder mehreren der Ansprüche 1 bis 10, gekennzeichnet durch eine Übergabeeinrichtung (103) mit einem oben liegenden Zentriertrichter (108) zum Einsetzen der Baueinheit, an den Wänden angeordneten, feststehenden Anschlägen (109-112) zur Auslenkung der Klappen in den Scharnieren (82), einer in der Trichtermitte angeordneten, feststehenden Säule (76) zur Entsperrung der Klappenriegel (72, 73) und mit Trennwänden (113-117), die mit den inneren Kammerwänden (10-14) ausfluchtbar sind.

12. Abfallhohlglassammler nach einem oder mehreren der Ansprüche 1 bis 11, dadurch gekennzeichnet, daß in gegenüberliegenden Behälterecken (135, 136) Handhaben (137) im Deckel (138) versenkt angeordnet und befestigt sind.

13. Abfallhohlglassammler nach einem oder mehreren der Ansprüche 1 bis 12, dadurch gekennzeichnet, daß die Übergabevorrichtung (103) auf einem Transportsilo oder einer Ladepritsche (122) eines Lkw angebracht ist und der Transportsilo bzw. die Ladepritsche (121) mit Trennwänden (123-125) versehen sind, welche mit den Kammerwänden (10-14) und den Trennwänden (113-117) der Übergabeeinrichtung (103) ausfluchtbar sind.

## Claims

1. A hollow glass waste collector (1) having a separating device (5) and a colour separating means in which the hollow glass waste is distinguished according to colour, said hollow glass waste collector having an insertion opening (4) and several compartments (6-9, 15) provided for each type of hollow gloss, wherein the separating device (5) consists of an essentially horizontal continuous transporter (16) with a lateral ejection via ejection elements (23-26) actuated by the colour separating means,
**characterized in that**
the ejection elements are in the form of hinged flaps (23-26) and a stationary ax (29) is arranged laterally beneath each hinged flap (23-26), said ax comprising a cutting edge which is turned upwards and serves for a deliberate shattering of the ejected hollow glasses.

2. A hollow glass waste collector according to claim 1,
**characterized in that**
a hollow glass transfer (30) to the continuous transporter (16) is arranged beneath the insertion opening (4), said hollow glass transfer comprising a receiving funnel (31, 32), the longitudinal walls of which define a transfer slot (39) extending in an extension of the inserting direction, wherein at least one of the longitudinal walls is in the form of a rocker (38) which is weight-loaded in the closing direction of the funnel opening, and a baffle plate (40a) is arranged in an extension of the insertion opening (4) above the funnel.

3. A hollow waste glass collector according to one or each of claims 1 or 2,
**characterized in that**
the continuous transporter (16) is in the form of a belt conveyor (18), the conveying means of which consists of a pair of parallel belts (41a, 42a) forming the longitudinal sides of a hollow (50) in the top run.

4. A hollow waste glass collector according to one or several of claims 1 to 3,
**characterized in that**
the hinged flaps (23, 26) sway about vertical axles (28) beside the continuous transporter (16) and serve for directing the hollow glasses into the funnels (52-55), the bottoms of which are directed diagonally upwards and which are defined by pairs of inclined walls (56, 57), at least one of which is in the form of a weight-loaded rocker and uncovers a longitudinal slot forming an obtuse angle with the transport direction.

5. A hollow waste glass container according to one or several of claims 1 to 4,
**characterized in that**
the hinged flaps (23, 26) are convex in the transport direction.

6. A hollow waste glass container according to one or several of claims 1 to 3 or 5,
**characterized in that**
the axles of the hinge flaps (57a, 57b) are plane and aligned with the transport means, wherein a stationary slope (58a, 59a) directed towards the cutting edge of the ax is flanged beside the bolt conveyor and a locking flap (56a) is arranged diagonally to the conveyor, said locking flap serving for aligning the hollow glass (55a) with respect to the rocker (58, 59).

7. A hollow waste glass collector according to one or several of claims 1 to 6,
**characterized in that**
the funnels (52-55) arranged beneath the hinged flaps (23-26) and the cutting edges of the axes (29) are accomodated in recesses of the fall shaft or the chamber wall.

8. A hollow waste glass collector according to one or several of claims 1 to 7,
**characterized in that**
the chambers (6-9) form a modular unit having a rectangular to square horizontal projection and chamber walls (10-14) arranged in the diagonals, wherein the continuous transporter (16) is aligned with one of the diagonals, along which a longitudinal chamber (15) with parallel chamber walls for receiving materials other than glass is partitioned off up to the center of the container, said longitudinal chamber being filled via the reversion section (20) of the continuous transporter (16), wherein the chamber (7) for white glass is limited by the outer walls (65, 66) and a chamber wall (11, 12) extending diagonally to the transport direction along the entire length of the diagonal.

9. A hollow waste glass collector according to one or several of claims 1 to 8,
**characterized in that**
a compartment for accommodating a power supply (16) arranged beneath the insertion opening is partitioned off from the white glass chamber (7).

10. A hollow waste glass collector according to one or several of claims 1 to 9,
**characterized in that**
the chambers (6, 7, 8, 9, 15) are closed with bottom flaps (65a, 66a, 80, 81, 118), the hinges (82) of which are arranged at the outside walls (65-68) of the modular unit and are resiliently prestressed in the closing direction, and the inner flap ends (70, 71) are supported on bolts (72, 73) adapted to be oriented against the spring prestress.

11. A hollow waste glass collector according to one or several of claims 1 to 10,
**characterized by**
a transfer means (103) having an upper centering funnel (108) for inserting the modular unit, stationary stops (109-112) arranged at the walls for orienting the flaps in the hinges (82), a stationary pillar (76) arranged in the funnel center for releasing the flap bolts (72, 73) and partition walls (113-117) adapted to be aligned with the inner chamber walls (10-14).

12. A hollow waste glass collector according to one or several of claims 1 to 11,
**characterized in that**
handles (137) are sunk in the lid (138) and fixed at opposite corners (135, 136) of the container.

13. A hollow waste glass collector according to one or several of claims 1 to 12,
**characterized in that**
the transfer means (103) is arranged on a transport silo or a loading platform (122) of a truck and the transport silo or the loading platform (121) is provided with partition walls (123-125) adapted to be aligned with the chamber walls (10-14) and the partition walls (113-117) of the transfer means (103).

## Revendications

1. Collecteur de déchets de verre creux (1) pourvue d'un dispositif de séparation (5) et d'un dispositif de tri selon la couleur, dans lequel les déchets du verre creux sont identifiés selon leur couleur, comprenant un orifice d'introduction (4) et plusieurs compartiments (6-9,15) prévus pour les différents types de verre creux, le dispositif de séparation (5) consistant en un engin sensiblement horizontale de manutention continue (16) présentant une éjection latérale par des éléments de déchargement (23-26) actionnés par le tri selon la couleur, **characterisé en ce que** les éléments de déchargement sont constitues par des clapets pivotants (23-26) et qu'une hache fixe (29) est disposée latéralement sous chaque clapet pivotant (23-26), la hache présentant une lame dirigée vers le haut et servant pour la démolition appropriée des verres creux éjectés.

2. Collecteur de déchets de verre creux selon la revendication 1, **characterisée en ce qu'**un transfert de verre creux (30) sur l'engin de manutention continue (16) est disposé sous l'orifice d'introduction (4), le transfert présentant un entonnoir de reception (31,32), dont les parois longitudinales délimitent une lente de transfert (39) s'étendant en prolongation de la direction d'introduction, au moins une des parois longitudinales étant formée par une manivelle oscillante (38) étant chargée de poids en direction de fermeture de l'orifice de l'entonnoir, et qu'un déflecteur (40a) est disposé en prolongation de l'orifice d'introduction (4) au-dessus de l'entonnoir.

3. Collecteur de déchets de verre creux selon l'une ou les deux des revendications 1 ou 2, **characterisé en ce que** l'engin de manutention continue (16) est formé par une courroie de transport (18), dont l'élement de transport consiste en une paire de sangles (41a, 42a) parallèles formant, dans le brin supérieur, les côtés longitudinales d'une excavation (50).

4. Collecteur de déchets de verre creux selon l'une ou plusieurs des revendications 1 à 3, **characterisé en ce que** les clapets pivotants (23,26) pivotent autour des axes perpendiculaires (28) auprès de l'engin de manutention continue (16) et qu'ils servant pour la déviation des verres creux dans des entonnoirs (52-55), dont le fond est dirigé obliquement vers le haut at formé par une paire de parois obliques (56,57), dont au moins une est une manivelle oscillante chargée de poids et mettant à découvert une fente longitudinale formant, avec la direction de transport, un angle obtus.

5. Collecteur de déchets de verre creux selon l'une ou plusieurs des revendications 1 à 4, **characterisé en ce que** les clapets pivotants (23,26) sont convexes dans la direction de transport.

6. Collecteur de déchets de verre creux selon l'une ou plusieurs des revendications 1 à 3 ou 5, **characterisé en ce que** les axes des clapets pivotants (57a,57b) sont plans et alignés avec la direction de transport, une déclivité stationnaire (58a, 59a) dirigés sur la lame de la hache étant disposée auprès de la courroie de transport et un clapet d'arrêt (56a) étant disposé transversalement à la courroie de transport, ce clapet servant pour l'alignement du verre creux (55a) par rapport à la manivelle oscillante (58,59).

7. Collecteur de déchets de verre creux selon l'une ou plusieurs des revendications 1 à 6, **characterisé en ce que** les entonnoirs (52-55) disposés sous les clapets pivotants (23-26) et les lames des haches (29) sont disposés dans des évidements de la paroie de la descente ou de la chambre.

8. Collecteur de déchets de verre creux selon l'une ou plusieurs de revendications 1 à 7, **characterisé en ce que** les chambres (6-9) constituent un ensemble de plan quadrangulaire ou carré avec des parois de chambre (10-14) disposées dans les diagonales, l'engin de manutention continue (16) étant aligné avec l'une des diagonales, au long de laquelle est séparé, par des parois de chambre parallèles s'étendant jusqu'au milieu du collecteur, une chambre longitudinale (15) pour la reception de non-verre, cette chambre étant chargée vie la partie d'inversion (20) de l'engin de manutention continue (16), la chambre (7) pour le verre blanc étant délimitée par las parois extérieures (65,66) et une paroi de chambre (11,12) s'étendant, transversalement à la direction de transport, sur tout le long de la diagonale.

9. Collecteur de déchets de verre creux selon l'une ou plusieurs des revendications 1 à 8, **characterisée en ce qu'** un compartiment disposé sous l'orifice d'introduction, pour le logement d'une alimentation en courant électrique (16), est séparé de la chambre (7) pour le verre blanc.

10. Collecteur de déchets de verre creux selon l'une ou plusieurs des revendications 1 à 9, **characterisé en ce que** les chambres (6,7,8,9,15) sont obturées par des trappes de fond (65a,66a,80,81,118), dont les charnières (82) sont disposées aux parois extérieurs (65-68) de l'ensemble et élastiquement précontraint dans la direction de fermeture, et en ce que les extremités intérieures (70,71) des trappes sont appuyés sur des verrous (72,73) déviables contre la précontrainte de ressort.

11. Collecteur de déchets de verre creux selon l'une ou plusieurs des revendications 1 à 10, **characterisé par** des moyens de transfert (103) présentant un entonnoir de centrage (108) en haut pour le placement de l'ensemble, des butées (109-112) fixes, disposées aux parois, pour l'orientation des trappes dans les charnières (82), une colonne (76) fixe disposée en milieu de l'entonnoir pour le déblocage des verrous de trappe (72,73), et des parois de séparation (113-117) qui peuvent être alignées avec les parois (10-14) de chambre internes.

12. Collecteur de déchets de verre creux selon l'une ou plusieurs des revendications 1 à 11, **characterisé en ce que,** dans des coins (135,136) opposés du collecteur, des poignées (137) sont noyées et fixées dans le couvercle (138).

13. Collecteur de déchets de verre creux selon l'une ou plusieurs des revendications 1 à 12, **characterisé en ce que** les moyens de transfert (103) sont montés sur un silo de transport ou sur une palette (122) d'un camion et que le silo de transport ou la palette (121) est pourvu de parois de séparation (123-125) qui peuvent être alignées avec les parois de chambre (10-14) et avec les parois de séparation (113-117) des moyens de transfert (103).
